# EUROPEAN PATENT SPECIFICATION

(11) **EP 4 187 283 B1**
(45) Date of publication and mention of the grant of the patent: **10.09.2025**
(21) Application number: 20947111.9
(22) Date of filing: 30.07.2020
(51) Int. Cl.: G01S 17/36, G01S 17/34, G01S 17/06, G01S 17/04, G01S 7/4912, G01S 7/499, G01S 17/42, G01S 17/58, G01S 17/931

(54) **LASER RADAR AND SMART VEHICLE**
LASERRADAR UND INTELLIGENTES FAHRZEUG
RADAR LASER ET VÉHICULE INTELLIGENT

(43) Date of publication of application: 31.05.2023
(73) Proprietor: Shenzhen Yinwang Intelligent Technologies Co., Ltd., Shenzhen City, Guangdong 518129 (CN)
(72) Inventor: LI, Menglin, Shenzhen, Guangdong 518129 (CN); LIU, Tonghui, Shenzhen, Guangdong 518129 (CN); JIANG, Tong, Shenzhen, Guangdong 518129 (CN)
(74) Representative: Maiwald GmbH
(86) International application number: PCT/CN2020/105930
(87) International publication number: WO 2022/021237

(56) References cited:
- WO-A1-2019/054939
- CN-A- 101 256 233
- CN-A- 101 256 233
- CN-A- 102 495 411
- CN-A- 105 589 074
- CN-A- 106 289 049
- CN-A- 109 188 453
- CN-A- 109 188 454
- CN-A- 110 244 281
- CN-A- 110 244 281
- CN-A- 111 049 585
- US-A1- 2010 001 897
- US-A1- 2010 258 708
- US-A1- 2022 268 891
- US-B1- 9 909 927
- US-H- H2 130

## Description

### TECHNICAL FIELD

This application relates to the radar detection field, and in particular, to a laser radar, an intelligent vehicle, and a beat frequency generation method.

### BACKGROUND

A laser radar (LiDAR) is an optical remote sensing technology in which related information of a target is obtained by detecting a scattered light characteristic of the target. The LiDAR has high measurement precision and fine time and space resolutions, can perform functions such as mapping, tracking, and imaging recognition, and has broad application prospects in the fields of intelligent transportation, automated driving, atmospheric environment monitoring, geographical mapping, unmanned aerial vehicles, and the like. The LiDAR may be mainly classified into three types based on modulation schemes: a pulsed laser radar (Pulsed LiDAR), an amplitude modulated continuous wave laser radar (AMCW LiDAR), and a coherent laser radar (Coherent LiDAR).

For the coherent laser radar, a linear frequency modulated laser signal is transmitted, and an echo signal formed by reflecting the laser signal by a target is received by the laser radar. The echo signal and a local-frequency signal are coherent at a front end of a detector, to generate a beat frequency signal whose frequency is a difference between instantaneous frequencies of the echo signal and the local-frequency signal. Speed information and distance information of the target may be obtained by analyzing the beat frequency signal.

A common laser radar transmits a signal and receives a signal through an optical path of an optical fiber. Due to a limitation of a size of the optical fiber, energy of a received echo signal is limited, resulting in low detection precision of the laser radar.

Document CN 110 244 281 A refers to a lidar system which includes a laser emitting light source, a scanning unit, a transmitting-receiving-coaxial optical unit and a differential reception unit. The laser emitting light source includes a laser and a modulator. The transmitting-receiving-coaxial optical unit is configured to receiving receive a frequency-modulated emission light signal, and pass the same to the scanning unit and the differential reception unit, and is also configured to pass a reflected light signal to the differential reception unit. The scanning unit is configured to reflecting the frequency-modulated emission light signal to a target object at a deflectable angle, and reflect the reflected light signal from the target object to the transmitting-receiving-coaxial optical unit. The differential reception unit is configured to differentially receive the reflected light signal based on the received frequency -modulated emission light signal. With a differential reception, the laser radar system reduces noise, increases the signal-to-noise ratio, and increases the detection distance.

Document US 9 909 927 B1 discloses an attenuation meter for use in a water environment. In operation, a transmitter of the meter transmits a laser pulse focused to a size at a predetermined range. A receiver of the meter images a focused spot to minimize unwanted light back scattering and avoid diffractive spreading within the back scattering region. Filtering the angular region can further reject scattered light. The filtered light is received, measured and processed by a oscilloscope as pulse averages. The meter also includes a photodetector to measure a diffuse attenuation coefficient. The output voltage of the photodetector is measured and processed by the oscilloscope that produces an average voltage over a preset number of pulses. A controller best fits voltage to time dependence to produce the diffuse attenuation coefficient. Only the shape of the receiver time dependence is required to provide the diffuse attenuation coefficient measurement.

Document CN 101 256 233 A provides a two-way loop transmitting and receiving telescope of synthetic aperture laser imaging radar, wherein the two-way loop comprises independent transmitting channel and receiving channel of image rotation telescope structure, connected with laser source, photo detector and telescope. A defocusing and transmitting space phase modulation plate is in the transmitting channel and a defocusing and receiving space phase modulation plate is in the receiving channel. The transmitting defocusing amount, transmitting phase modulation function, receiving defocusing amount, receiving phase modulation function are controlled. This set-up can use the same telescope to implement the space quadratic phase additionally biased laser shot and eliminates the optical defocus receiving of target echo receiving wave aberration, and generates proper and controlled phase quadratic course at the radar direction of movement and realizes aperture synthesis imaging.

Document US 2010/001897 A1 discloses a radar sensing system for a vehicle that includes a radar sensor device, a cover panel and a control. The radar sensor device is disposed at a pocket established at an upper edge of the vehicle windshield and having a forward transmitting and receiving direction that is not through the windshield. The cover panel is disposed at the radar sensor device and is substantially sealed at the vehicle windshield at or near the pocket at the upper edge of the vehicle windshield. The cover panel has a material that is substantially transmissive to radar frequency electromagnetic radiation waves. The radar sensor device emits radar frequency electromagnetic radiation waves that transmit through the cover panel. The control is responsive to an output of the radar sensor device.

### SUMMARY

Embodiments of this application disclose a laser radar optical system, to transmit a signal through a spatial optical path, increase a reception aperture according to an actual requirement, and increase received echo signals. The present invention is defined by the attached set of claims. Embodiments and aspects which are not covered by the invention should be considered as examples useful for understanding the invention.

A first aspect of embodiments of this application discloses a laser radar according to claim 1.

In the foregoing method, a coherent detection optical path is implemented by using the beam shaping module, the beam splitting module, the receiving module, and the optical frequency mixing module, so that an aperture for receiving the echo signal can be increased, an optical crosstalk problem of the echo signal can be alleviated, and therefore more energy of the echo signal can be received. Therefore, more energy of the first beat frequency signal and the second beat frequency signal can be obtained by performing frequency mixing on the local-frequency signal and the echo signal, thereby improving precision of detecting the target object by the laser radar.

Optionally, the beam splitting module includes a beam splitter and a first half-wave plate, the first half-wave plate is disposed between the beam shaping module and the beam splitter, and the first half-wave plate is configured to adjust a polarization direction of the laser signal.

Optionally, the target information of the target object includes at least one of a distance or a speed.

In the foregoing method, polarization states of the echo signal and the sounding signal are changed by using the quarter-wave plate, so that frequency mixing efficiency can be improved.

Optionally, the optical frequency mixing module includes a beam combiner and a polarization beam splitter, the wave plate further includes a second half-wave plate, and the polarization beam splitter includes a first polarization beam splitter. The second half-wave plate is disposed between the beam combiner and the first polarization beam splitter. The beam splitter, the beam combiner, the second half-wave plate, and the first polarization beam splitter are disposed on one axis. The beam combiner is configured to combine the echo signal for polarization state conversion and the local-frequency signal into one optical path. The second half-wave plate is configured to convert the echo signal and the local-frequency signal that are combined into one optical path into a first 45-degree polarized signal and a second 45-degree polarized signal respectively, where the first 45-degree polarized signal and the second 45-degree polarized signal are signals whose polarization directions are orthogonal. The first polarization beam splitter is configured to perform frequency mixing on the first 45-degree polarized light and the second 45-degree polarized light to obtain the first beat frequency signal and the second beat frequency signal whose phase difference is 180 degrees.

Optionally, the polarization beam splitter includes a second polarization beam splitter. The beam splitter and the second polarization beam splitter are disposed on one axis. The second polarization beam splitter is configured to perform frequency mixing on the echo signal for polarization state conversion and the local-frequency signal that are respectively in two optical paths, to obtain the first beat frequency signal and the second beat frequency signal whose phase difference is 180 degrees. The echo signal and the local-frequency signal are signals whose polarization directions are orthogonal.

Optionally, polarization states of the sounding signal and the local-frequency signal are linear polarization states.

Optionally, a polarization state of a sounding signal obtained through polarization state conversion is a circular polarization state or an elliptic polarization state.

Optionally, a polarization state of the echo signal is a circular polarization state or an elliptic polarization state, and a polarization state of an echo signal obtained through polarization state conversion is a linear polarization state.

A second aspect of embodiments of this application discloses an intelligent vehicle, including a laser radar and a processor. The laser radar is configured to perform the functions of the laser radar in the first aspect. The processor is configured to perform intelligent driving based on the laser radar.

In the foregoing method, the intelligent vehicle performs intelligent driving based on the laser radar, so that precision of a driving path can be improved, and a driving safety coefficient can be increased.

### BRIEF DESCRIPTION OF DRAWINGS

FIG. 1 is a functional block diagram of an intelligent vehicle according to an embodiment of this application;
FIG. 2 is a schematic diagram of an architecture of a laser radar based on an optical path of an optical fiber according to an embodiment of this application;
FIG. 2A is a schematic diagram of an architecture of a laser radar according to an embodiment of this application;
FIG. 2B is a schematic diagram of a beat frequency signal generated by a triangular wave according to an embodiment of this application;
FIG. 3 is a schematic flowchart of a beat frequency signal generation method according to an embodiment of this application;
FIG. 3A is a schematic diagram of a structure of a laser radar according to an embodiment of this application not covered by the claims but useful for understanding the invention;
FIG. 3B is a schematic diagram of a structure of another laser radar according to an embodiment of this application;
FIG. 3C is a schematic diagram of a structure of another laser radar according to an embodiment of this application not covered by the claims but useful for understanding the invention; and
FIG. 3D is a schematic diagram of a structure of another laser radar according to an embodiment of this application.

### DESCRIPTION OF EMBODIMENTS

The following describes embodiments of this application with reference to the accompanying drawings in embodiments of this application.

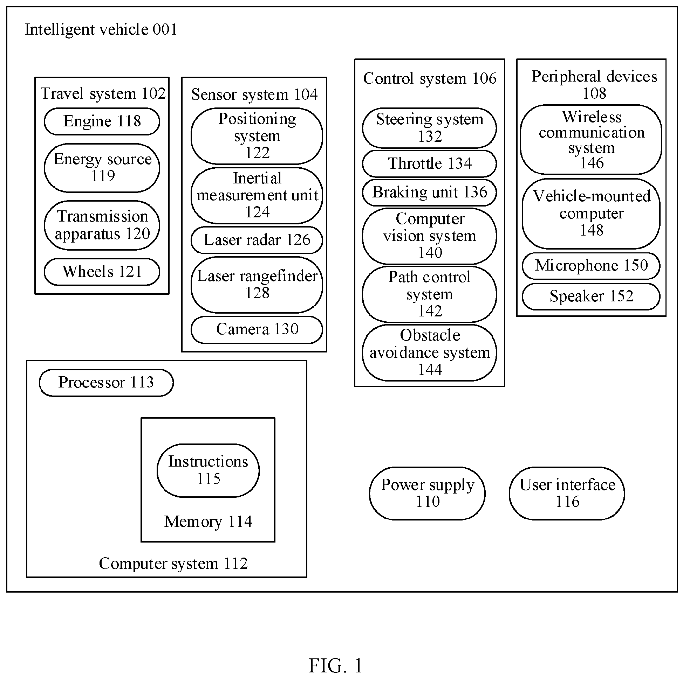

An embodiment of this application provides an intelligent vehicle 001. FIG. 1 is a functional block diagram of an intelligent vehicle according to an embodiment of this application. In an embodiment, the intelligent vehicle 001 may be configured in a fully or partially automated driving mode. For example, the intelligent vehicle 001 may control the intelligent vehicle 001 in the automated driving mode, determine a current status of the vehicle and a surrounding environment of the vehicle through a manual operation, determine possible behavior of at least one another vehicle in the surrounding environment, determine a confidence level corresponding to a possibility of performing the possible behavior by the another vehicle, and control the intelligent vehicle 001 based on determined information. When the intelligent vehicle 001 is in the automated driving mode, the intelligent vehicle 001 may be configured to operate without interacting with a person.

The intelligent vehicle 001 may include various subsystems, for example, a travel system 102, a sensor system 104, a control system 106, one or more peripheral devices 108, a power supply 110, a computer system 112, and a user interface 116. Optionally, the intelligent vehicle 001 may include more or fewer subsystems, and each subsystem may include a plurality of elements. In addition, the subsystems and the elements of the intelligent vehicle 001 may be all interconnected in a wired or wireless manner.

The travel system 102 may include a component that provides power for motion of the intelligent vehicle 001. In an embodiment, the travel system 102 may include an engine 118, an energy source 119, a transmission apparatus 120, and a wheel/tire 121. The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 118 converts the energy source 119 into mechanical energy.

For example, the energy source 119 includes gasoline, diesel, other petroleum-based fuels, propane, other compressed gas-based fuels, anhydrous alcohol, a photovoltaic module, a battery, and other power sources. The energy source 119 may also provide energy for another system of the intelligent vehicle 001.

The transmission apparatus 120 may transmit mechanical power from the engine 118 to the wheel 121. The transmission apparatus 120 may include a gearbox, a differential, and a drive shaft. In an embodiment, the transmission apparatus 120 may further include another device, for example, a clutch. The drive shaft may include one or more shafts that may be coupled to one or more wheels 121.

The sensor system 104 may include several sensors that sense information about a surrounding environment of the intelligent vehicle 001. For example, the sensor system 104 may include a positioning system 122 (the positioning system may be a GPS system, a BeiDou system, or another positioning system), an inertial measurement unit (inertial measurement unit, IMU) 124, a laser radar 126, a laser rangefinder 128, and a camera 130. The sensor system 104 may further include a sensor that monitors an internal system of the intelligent vehicle 001 (for example, a vehicle-mounted air quality monitor, a fuel gauge, or an oil temperature gauge). Sensor data from one or more of these sensors may be used to detect an object and corresponding features (a location, a shape, a direction, a speed, and the like) of the object. The detection and recognition are key functions for implementing a safe operation by the autonomous intelligent vehicle 001.

The positioning system 122 may be configured to estimate a geographical location of the intelligent vehicle 001. The IMU 124 is configured to sense a location and direction change of the intelligent vehicle 001 based on an inertial acceleration. In an embodiment, the IMU 124 may be a combination of an accelerometer and a gyroscope. For example, the IMU 124 may be configured to measure a curvature of the intelligent vehicle 001.

The laser radar 126 may use a radio signal to sense an object in a surrounding environment of the intelligent vehicle 001. In some embodiments, the laser radar 126 is a radar system for transmitting a sounding signal to detect characteristics, such as a location and a speed, of a target object. An operating principle of the laser radar 126 is as follows: A sounding signal (a laser beam) is transmitted to a target object, and then coherence is implemented between a local-frequency signal and a received signal reflected from the target object (an echo signal), to generate a first beat frequency signal and a second beat frequency signal whose frequencies are a difference between instantaneous frequencies of the echo signal and the local-frequency signal. A phase difference between the first beat frequency signal and the second beat frequency signal is 180 degrees. Then a differential receiving unit performs differential amplification on the first beat frequency signal and the second beat frequency signal, and outputs signals obtained through differential amplification to a processor, and the processor processes the signals to obtain information, such as a speed and a distance, of the target object.

The laser rangefinder 128 may use laser light to sense an object in an environment in which the intelligent vehicle 001 is located. In some embodiments, the laser rangefinder 128 may include one or more laser sources, a laser scanner, one or more detectors, and another system component.

The camera 130 may be configured to capture a plurality of images of a surrounding environment of the intelligent vehicle 001. The camera 130 may be a still camera or a video camera.

The control system 106 controls operations of the intelligent vehicle 001 and components of the intelligent vehicle 001. The control system 106 may include various elements, including a steering system 132, a throttle 134, a braking unit 136, a sensor fusion algorithm 138, a computer vision system 140, a path control system 142, and an obstacle avoidance system 144.

The steering system 132 may operate to adjust an advancing direction of the intelligent vehicle 001. For example, in an embodiment, the steering system 132 may be a steering wheel system.

The throttle 134 is configured to control an operating speed of the engine 118, so as to control a speed of the intelligent vehicle 001.

The braking unit 136 is configured to control the intelligent vehicle 001 to decelerate. The braking unit 136 may slow down the wheel 121 through friction. In another embodiment, the braking unit 136 may convert kinetic energy of the wheel 121 into a current. Alternatively, the braking unit 136 may reduce a rotational speed of the wheel 121 in another form, so as to control the speed of the intelligent vehicle 001.

The computer vision system 140 may operate to process and analyze an image captured by the camera 130, so as to recognize objects and/or features in the surrounding environment of the intelligent vehicle 001. The objects and/or the features may include a traffic signal, a road boundary, and an obstacle. The computer vision system 140 may use an object recognition algorithm, a structure from motion (Structure from Motion, SFM) algorithm, video tracking, and other computer vision technologies. In some embodiments, the computer vision system 140 may be configured to draw a map for an environment, track an object, estimate a speed of an object, and the like.

The path control system 142 is configured to determine a travel path for the intelligent vehicle 001. In some embodiments, the path control system 142 may determine the travel path for the intelligent vehicle 001 with reference to data from the sensor 138, the GPS 122, and one or more predetermined maps.

The obstacle avoidance system 144 is configured to recognize, evaluate, and avoid or bypass, in another manner, a potential obstacle in the environment of the intelligent vehicle 001.

Certainly, in an example, the control system 106 may additionally or alternatively include components other than those shown and described. Alternatively, some of the components shown above may be omitted.

The intelligent vehicle 001 interacts with an external sensor, another vehicle, another computer system, or a user by using the peripheral device 108. The peripheral device 108 may include a wireless communication system 146, a vehicle-mounted computer 148, a microphone 150, and/or a speaker 152.

In some embodiments, the peripheral device 108 provides a means for a user of the intelligent vehicle 001 to interact with the user interface 116. For example, the vehicle-mounted computer 148 may provide information for the user of the intelligent vehicle 001. The user interface 116 may further operate the vehicle-mounted computer 148 to receive a user input. The vehicle-mounted computer 148 may be operated by using a touchscreen. In other cases, the peripheral device 108 may provide a means for the intelligent vehicle 001 to communicate with another device located in the vehicle. For example, the microphone 150 may receive audio (for example, a voice command or another audio input) from the user of the intelligent vehicle 001. Similarly, the speaker 152 may output audio to the user of the intelligent vehicle 001.

The wireless communication system 146 may wirelessly communicate with one or more devices directly or by using a communication network. For example, the wireless communication system 146 may use 3G cellular communication such as CDMA, EVD0, or GSM/GPRS, 4G cellular communication such as LTE, or 5G cellular communication. The wireless communication system 146 may communicate with a wireless local area network (wireless local area network, WLAN) by using Wi-Fi. In some embodiments, the wireless communication system 146 may directly communicate with a device by using an infrared link, Bluetooth, or ZigBee. Other wireless protocols, such as various vehicle communication systems, for example, the wireless communication system 146, may include one or more dedicated short range communications (dedicated short range communications, DSRC) devices, and these devices may include public and/or private data communication between vehicles and/or roadside stations.

The power supply 110 may supply power to the components of the intelligent vehicle 001. In an embodiment, the power supply 110 may be a rechargeable lithium-ion or lead-acid battery. One or more battery packs of such a battery may be configured as a power supply to supply power to the components of the intelligent vehicle 002. In some embodiments, the power supply 110 and the energy source 119 may be implemented together. For example, the power supply 110 and the energy source 119 are implemented together in some all-electric vehicles.

Some or all functions of the intelligent vehicle 001 are controlled by the computer system 112. The computer system 112 may include at least one processor 113. The processor 113 executes instructions 115 stored in a non-transitory computer-readable medium such as a data storage apparatus 114. The computer system 112 may be alternatively a plurality of computing devices that control individual components or subsystems of the intelligent vehicle 001 in a distributed manner.

The processor 113 may be any conventional processor such as a commercially available CPU. Alternatively, the processor may be a dedicated device such as an ASIC or another hardware-based processor. Although FIG. 1 functionally shows the processor, the memory, and other elements of a computer in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer. Therefore, a reference to the processor or the computer is understood as including a reference to a set of processors, computers, or memories that may or may not operate in parallel. Different from using a single processor to perform the steps described herein, some components, such as a steering component and a deceleration component, each may have its own processor, and the processor performs only calculation related to a component-specific function.

In various aspects described herein, the processor may be located away from the vehicle and wirelessly communicate with the vehicle. In another aspect, some of the processes described herein are performed on a processor arranged in the vehicle, and others are performed by a remote processor, including performing a necessary step to perform single manipulation.

In some embodiments, the memory 114 may include instructions 115 (for example, program logic), and the instructions 115 may be executed by the processor 113 to perform various functions of the intelligent vehicle 001, including the functions described above. The memory 124 may also include additional instructions, including instructions to send data to, receive data from, interact with, and/or control one or more of the travel system 102, the sensor system 104, the control system 106, and the peripheral device 108.

In addition to the instructions 115, the memory 114 may further store data such as road map and path information, other data such as a location, direction and speed of a vehicle, and a speed and location of a target object (for example, another vehicle) around the vehicle, and other information. The information may be used by the intelligent vehicle 001 and the computer system 112 when the intelligent vehicle 001 operates in an autonomous mode, a semiautonomous mode, and/or a manual mode.

The user interface 116 is configured to provide information for or receive information from the user of the intelligent vehicle 001. Optionally, the user interface 116 may include one or more input/output devices in a set of peripheral devices 108, for example, the wireless communication system 146, the vehicle-mounted computer 148, the microphone 150, and the speaker 152.

The computer system 112 may control a function of the intelligent vehicle 001 based on inputs received from various subsystems (for example, the travel system 102, the sensor system 104, and the control system 106) and the user interface 116. For example, the computer system 112 may control, by using an input from the control system 106, the steering unit 132 to avoid obstacles detected by the sensor system 104 and the obstacle avoidance system 244. In some embodiments, the computer system 112 is operable to provide control over many aspects of the intelligent vehicle 001 and the subsystems of the intelligent vehicle 001.

Optionally, one or more of the foregoing components may be mounted in separation from or associated with the intelligent vehicle 001. For example, the data storage apparatus 114 may be partially or completely separated from the intelligent vehicle 001. The foregoing components may be communicatively coupled together in a wired and/or wireless manner.

Optionally, the foregoing components are merely examples. In actual application, components in the foregoing modules may be added or omitted according to an actual requirement. FIG. 1 should not be understood as a limitation on embodiments of this application.

The intelligent vehicle 001 may be a car, a truck, a motorcycle, a bus, a boat, an airplane, a helicopter, a lawn mower, an entertainment vehicle, a playground vehicle, a construction device, a tram, a golf cart, a train, a handcart, or the like. This is not particularly limited in embodiments of this application.

It can be understood that the functional diagram of the intelligent vehicle in FIG. 1 is only an example implementation in this embodiment of this application, and the intelligent vehicle in this embodiment of this application includes but is not limited to the foregoing structure.

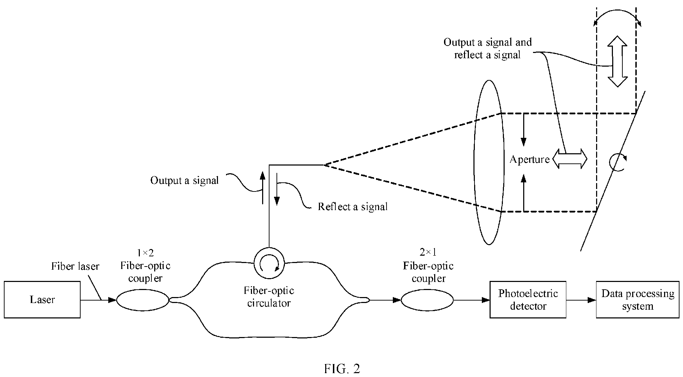

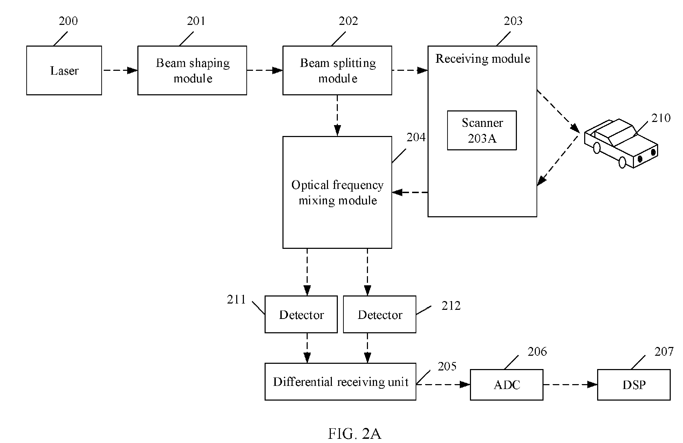

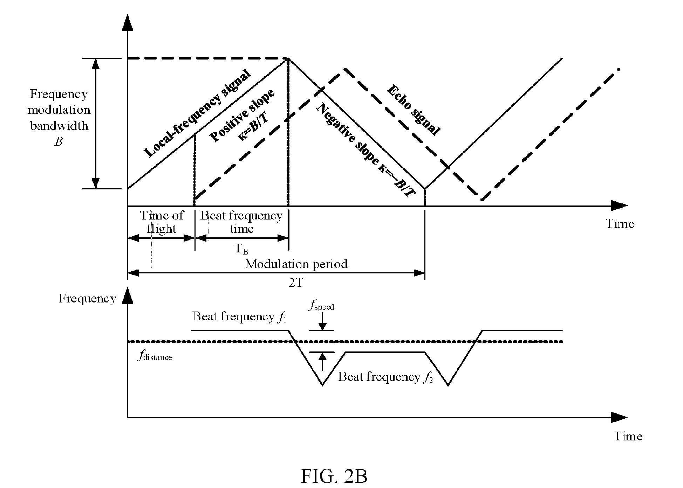

Currently, a common laser radar is shown in FIG. 2, which is a schematic diagram of an architecture of a laser radar based on an optical path of an optical fiber. It can be learned from FIG. 2 that the laser radar based on an optical path of an optical fiber includes a laser, a 1×2 fiber-optic coupler, a fiber-optic circulator, and a 2×1 fiber-optic coupler. A laser signal transmitted by the laser enters an optical path through coupling by an optical fiber. The laser signal is split by the 1×2 fiber-optic coupler into two parts: a sounding signal and a local-frequency signal. The sounding signal is transmitted to a target object through the fiber-optic circulator. An echo signal formed through reflection by the target object is coupled to the optical fiber by a lens, is received by the fiber-optic circulator, and then passes the 2×1 fiber-optic coupler with the local-frequency signal to generate a beat frequency signal. Then the beat frequency signal is received by a detector and then processed by a differential amplifier circuit.

Because the sounding signal needs to be transmitted through the fiber-optic circulator and the echo signal needs to be received through the fiber-optic circulator, existence of the fiber-optic circulator may cause crosstalk to the received echo signal. In addition, the echo signal needs to be coupled to the optical fiber through the lens. Due to a limitation of a size of the optical fiber, an aperture of the lens cannot be excessively large. This limits energy of the received echo signal, resulting in low precision of detection by the laser radar.

To resolve the foregoing problems, this application proposes a laser radar. FIG. 2A is a schematic diagram of an architecture of a laser radar according to an embodiment of this application. The laser radar includes a laser 200, a beam shaping module 201, a beam splitting module 202, a receiving module 203, an optical frequency mixing module 204, a differential receiving unit 205, an analog-to-digital converter (analog-to-digital converter, ADC) 206, and a processor 207.

The laser radar in this embodiment of this application can be used in various fields such as intelligent transportation, automated driving, atmospheric environment monitoring, geographical mapping, and unmanned aerial vehicles, and can perform distance measurement, speed measurement, target tracking, imaging recognition, and other functions.

The laser 200 generates a laser signal. The laser signal generated by the laser may be a frequency modulated continuous wave (Frequency Modulated Continuous Wave, FMCW) signal, and a modulation waveform of a laser frequency of the laser signal may be in a sawtooth shape, or may be a triangular wave or a waveform in another form. When the laser signal generated by the laser 200 is an FMCW signal, the laser 200 may be a tunable laser (Tunable Laser, TL), for example, a distributed feedback laser (Distributed Feedback Laser, DFB), a laser diode (Laser diode, LD), a fiber-optic laser, or a vertical cavity surface emitting laser (Vertical Cavity Surface Emitting Laser, VCSEL). It can be understood that the laser signal may be referred to as a laser pulse, a laser beam, laser light, or another name, and these names all fall within the protection scope of embodiments of this application provided that the names have the same meaning. In this embodiment of this application, the laser signal generated by the laser 200 is used to measure at least one of a speed or a distance of a target object 210.

The beam shaping module 201 is configured to perform collimation on the laser signal generated by the laser 200. A signal obtained through collimation may meet preset optical characteristic requirements such as a light spot size, a divergence angle, and a beam waist radius. It should be noted that the beam shaping module 201 may be a lens, to be specific, includes one or more lenses.

The beam splitting module 202 is configured to perform beam splitting on the laser signal obtained through collimation, to obtain a sounding signal and a local-frequency signal through beam splitting. Optical characteristics, such as energy and polarization states, of the sounding signal and the local-frequency signal obtained through beam splitting are consistent, and are all consistent with optical characteristics of the laser signal generated by the laser 200.

The receiving module 203 includes a scanner 203A, and the scanner 203A is also referred to as a 2D scanner. The receiving module 203 is configured to convert a polarization state of the sounding signal, and the scanner 203A transmits the sounding signal based on a specific angle. After the transmit signal is transmitted, the transmit signal is reflected by the target object 210 to form an echo signal. In this case, the scanner 203A is further configured to receive the echo signal, and the receiving module 203 is further configured to convert a polarization state of the received echo signal, and then aggregate the echo signal to the optical frequency mixing module. A module used for transmission and a module used for reception in the receiving module 203 may be modules independent of each other. The receiving module 203 usually includes a telescopic optical system, and the telescopic optical system may include at least one of the following telescopic optical systems: a Kepler type, a Galileo type, a Newton type, and a Cassegrain type.

The optical frequency mixing module 204 is configured to perform frequency mixing on the echo signal received by the receiving module 203 and the local-frequency signal obtained through splitting by the beam splitting module 202, to obtain a first beat frequency signal and a second beat frequency signal. The optical frequency mixing module has a semi-transparent and semi-reflective property, to be specific, performs reflection and refraction on a received signal to form two beams of signals. The first beat frequency signal and the second beat frequency signal are used to determine at least one of a distance or a speed of the target object. Beat frequency signals obtained by the optical frequency mixing module 204 by performing frequency mixing includes the first beat frequency signal and the second beat frequency signal, and a phase difference between the first beat frequency signal and the second beat frequency signal is 180 degrees. It should be noted that the beat frequency signal is a signal whose frequency is a difference between instantaneous frequencies of the local-frequency signal and the echo signal. The beat frequency signal may also be referred to as a beat wave signal, a differential frequency signal, or the like. A name of the beat frequency signal is not limited in this embodiment of this application.

The laser radar further includes a detector 211 and a detector 212. The first beat frequency signal generated by the optical frequency mixing module 204 is received by a photosensitive surface of the detector 211, and the second beat frequency signal received by the optical frequency mixing module 204 is collected by a photosensitive surface of the detector 212.

The differential receiving unit 205 is configured to differentially receive the first beat frequency signal and the second beat frequency signal that are received by the detector 211 and the detector 212 to obtain one beat frequency signal. With the signal obtained through differential reception, noise can be greatly reduced, and a signal-to-noise ratio can be increased, thereby improving measurement precision of a radar detection system.

The analog-to-digital converter ADC 206 is configured to sample a beat frequency signal. The sampling is essentially a process of converting an analog signal into a digital signal.

For the processor 207, the processor may include a device with a computing capability, for example, a digital signal processor (Digital signal processor, DSP), a central processing unit (CPU), an accelerated processing unit (APU), a graphics processing unit (GPU), a microprocessor, or a microcontroller. The DSP is used as an example for description in the accompany drawing. The processor is configured to process the sampled beat frequency signal to obtain information, such as a speed and a distance, of the target object 210.

In this embodiment of this application, the target object 210 is also referred to as a reflector, and the target object 210 may be any object in a scanning direction of the scanner, for example, may be a person, a mountain, a vehicle, a tree, or a bridge. FIG. 1 shows a vehicle as an example.

In this embodiment of this application, the operation of processing the sampled beat frequency signal to obtain the information, such as the speed and the distance, of the target object 210 may be performed by one or more processors 207, for example, performed by one or more DSPs, or certainly, performed by one or more processors 207 in conjunction with another device, for example, jointly performed by one DSP in conjunction with one or more central processing units CPUs. When the processor 207 processes the beat frequency signal, this may be specifically implemented by invoking a computer program stored in a computer-readable storage medium. The computer-readable storage medium includes but is not limited to a random access memory (random access memory, RAM), a read-only memory (read-only memory, ROM), an erasable programmable read-only memory (erasable programmable read only memory, EPROM), and a compact disc read-only memory (compact disc read-only memory, CD-ROM), and may be configured in the processor 207, or may be independent of the processor 207.

In this embodiment of this application, some of the aforementioned devices may be a single device or a plurality of devices. For example, there may be one or more lasers 200. When there is one laser 200, the one laser 200 may alternately transmit a laser signal with a positive slope and a laser signal with a negative slope in time domain. When there are two lasers 200, one laser transmits a laser signal with a positive slope, the other laser transmits a laser signal with a negative slope, and the two lasers 200 may transmit laser signals synchronously.

As shown in FIG. 2B, for example, the modulation waveform of the frequency of the laser signal is triangular-wave linear frequency modulation. Frequency mixing is performed on the echo signal and the local-frequency signal after a time of flight. The time of flight is a time from a moment at which the sounding signal obtained through splitting from the laser signal is transmitted to a moment at which the echo signal is returned. The beat frequency signal generated by the echo signal and the local-frequency signal after the time of flight is constant within a specific time. The beat frequency signal is a beat frequency signal obtained by the differential receiving unit by differentially receiving the first beat frequency signal and the second beat frequency signal. The time is a beat frequency time. The beat frequency signal can accurately reflect the distance and speed information of the target object. The beat frequency signal needs to include a beat frequency f₁ corresponding to a positive slope and a beat frequency f₂ corresponding to a negative slope. A spectrum f_{speed} related to the speed of the target object may be expressed as f_{speed}=(f₁-f₂)/2. A frequency f_{distance} related to the distance of the target object may be expressed as f_{distance}=(f₁+f₂)/2. After f_{speed} and f_{distance} are obtained, the distance of the target object (from the laser radar) and the moving speed of the target object may be calculated.

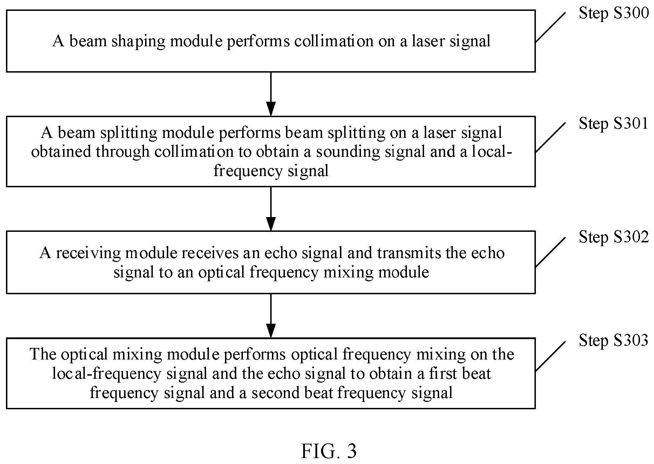

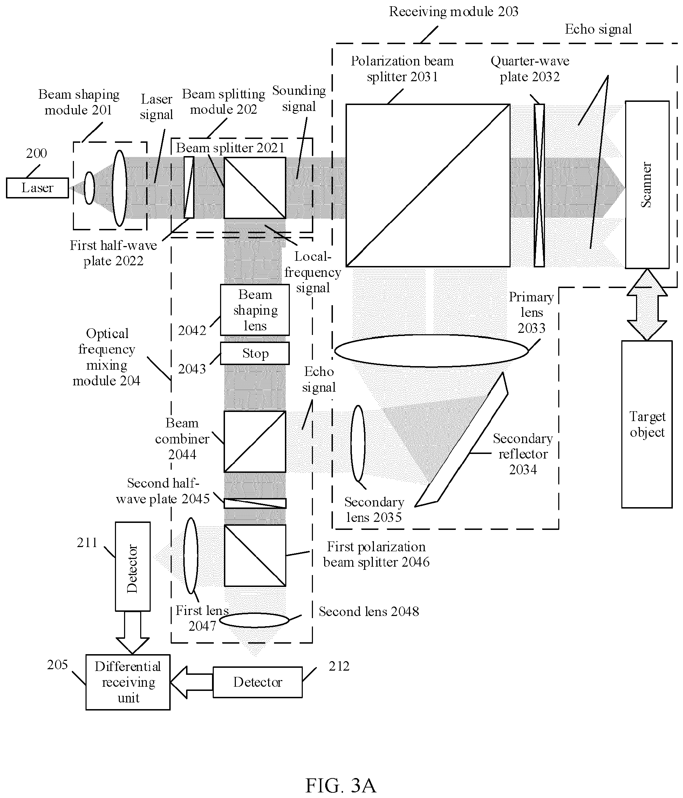

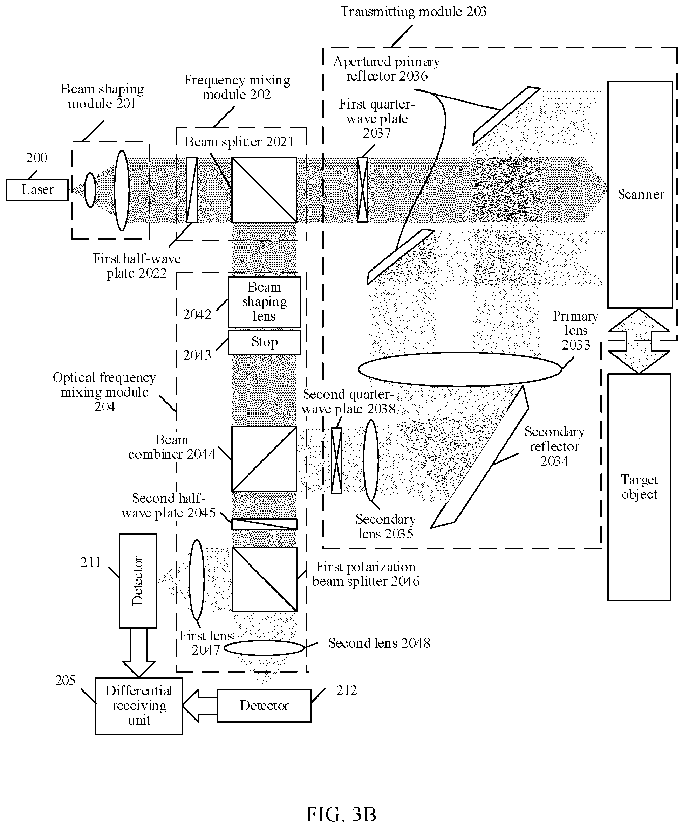

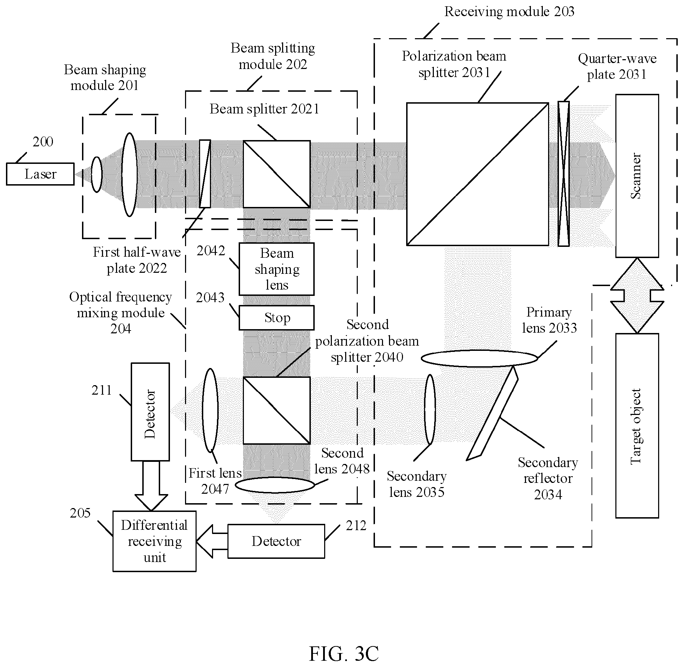

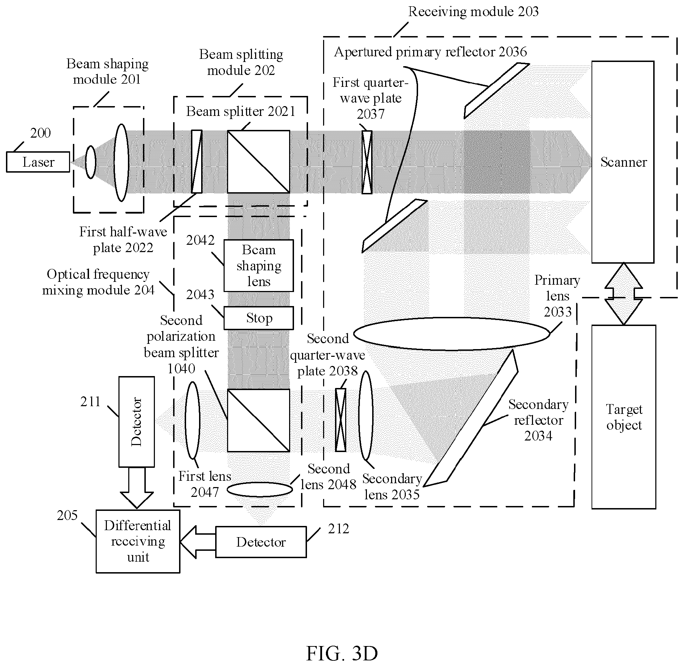

FIG. 3 is a schematic flowchart of a beat frequency signal generation method according to an embodiment of this application. The process may be implemented based on the laser radar shown in FIG. 2A. The method includes but is not limited to the following steps.

Step S300: The beam shaping module performs collimation on a laser signal generated by the laser.

Specifically, light spot energy of the laser signal generated by the laser 200 in the laser radar optical system is usually non-uniformly distributed in space. Generally, light spot energy is higher in the middle and lower at edges. Typical distribution of light spot energy in space is Gaussian distribution. A beam of the laser signal has different beam waist locations and sizes in a fast-axis direction and a slow-axis direction, so that the laser signal forms a beam in the fast-axis direction and an astigmatic beam in the slow-axis direction. The beam in the fast-axis direction and the beam in the slow-axis direction have different divergence angles. The beam in the fast-axis direction has a larger divergence angle, and the beam in the slow-axis direction has a smaller divergence angle. As a result, the beam of the laser signal transmitted by the laser 200 is asymmetrical, and beam quality is poor. To ensure that the laser radar optical system in this embodiment of this application can have high accuracy during use to achieve sensitive information collection, and to achieve uniform distribution of light spot energy and high beam quality for the laser signal, the beam of the laser signal in the fast-axis direction needs to be collimated and the beam in the slow-axis direction needs to be homogenized by using the beam shaping module 201.

With reference to the beam shaping module 201 shown in FIG. 3A, the beam shaping module 201 may include one or more lenses. In this embodiment of this application, descriptions are provided by using a beam shaping module including two lenses as an example. In actual application, a corresponding lens may be selected according to an actual requirement (for example, a specific requirement such as a light spot size, a divergence angle, and a beam waist radius). Step S301: The beam splitting module performs beam splitting on a laser signal obtained through collimation, to obtain a sounding signal and a local-frequency signal.

Specifically, in this embodiment of this application, the laser signal generated by the laser 200 in the laser radar optical system is a frequency modulated continuous wave laser signal, and information carried in the frequency modulated continuous wave laser signal is mainly frequency information. A beat frequency signal is obtained through coherence between the local-frequency signal and an echo signal. At least one of a distance or a speed of the target object is calculated by using the beat frequency signal. Therefore, beam splitting needs to be performed, by using the beam splitting module 202, on the laser signal obtained through collimation, to obtain the sounding signal and the local-frequency signal. The local-frequency signal and the sounding signal are linearly polarized laser signals with a same polarization direction.

Optionally, as shown in FIG. 3A and FIG. 3B, the beam splitting module 202 includes an optional first half-wave plate 2022 and a beam splitter 2021. The laser signal obtained through processing by the beam shaping module 201 is a linearly polarized laser signal. The optional first half-wave plate 2022 adjusts a polarization direction of the linearly polarized laser signal, and the beam splitter 2021 in the beam splitting module 202 performs beam splitting on the linearly polarized laser signal to obtain the local-frequency signal and the sounding signal.

Optionally, as shown in FIG. 3C and FIG. 3D, the beam splitting module 202 includes a first half-wave plate 2022 and a beam splitter 2041. An angle of a laser signal passing through the first half-wave plate may be adjusted by adjusting an included angle between a fast axis of the first half-wave plate 2022 and a linear polarization direction of the laser signal. In FIG. 3C and FIG. 3D provided in this embodiment of this application, the first half-wave plate 2022 is configured to adjust the linearly polarized laser signal into a signal whose polarization direction is 45 degrees. Therefore, polarization directions of the local-frequency signal and the echo signal that are obtained through beam splitting by the beam splitter 2021 are also 45 degrees.

The beam splitter 2021 may be a polarization beam splitter, a non-polarization beam splitter, a half-silvered prism, or a flat-plate splitter. The beam splitter 2021 shown in FIG. 3A is an example provided in this embodiment of this application. The laser signal is split into two or more beams through reflection and refraction by the beam splitter 2021. As shown in FIG. 3A, in this embodiment of this application, a signal obtained through reflection by the beam splitter 2021 is the local-frequency signal, and a signal obtained through refraction by the beam splitter 2021 is the sounding signal.

It should be noted that, if the laser signal transmitted by the laser is a linearly polarized signal, the laser signal undergoes beam shaping by the optical shaping module and then undergoes beam splitting by the beam splitting module; or if the laser signal transmitted by the laser is not a linearly polarized signal, the laser signal needs to be converted into a linearly polarized signal before the beam splitting module 202. A specific conversion manner is disposing a wave plate (not specifically shown in the figure in this embodiment of this application) before the beam splitting module 202. The wave plate may be disposed between the beam shaping module 201 and the beam splitting module 102, or the wave plate may be disposed between the laser 200 and the beam shaping module 201. A quantity of wave plates and a category of the wave plate may be selected based on an actual situation. This is not limited in this embodiment of this application.

Step S302: The receiving module is configured to receive the echo signal and transmit the echo signal to the optical frequency mixing module.

Specifically, in this embodiment of this application, because a sounding signal in a circular polarization state or an elliptic polarization state has higher stability, a polarization state of a sounding signal transmitted by the receiving module 203 to the target object is a circular polarization state or an elliptic polarization state. A polarization state of the laser signal obtained by transmitting, by the beam shaping module 201, the laser signal generated by the laser 200 is a linear polarization state. Therefore, a polarization state of the sounding signal obtained through beam splitting by the beam splitter 2021 is also a linear polarization state. Therefore, a quarter-wave plate (namely, a 1/4-wave plate) needs to be disposed on a side, of the beam splitter 2021, on which the sounding signal is output. The quarter-wave plate is configured to convert the polarization state of the sounding signal from the linear polarization state into a circular polarization state. The receiving module 203 receives the echo signal that is obtained by transmitting the sounding signal by the target object, and aggregates the echo signal to the optical frequency mixing module 204 for frequency mixing with the local-frequency signal. To improve frequency mixing efficiency, before frequency mixing is performed on the echo signal and the local-frequency signal, a quarter-wave plate needs to be disposed on a side, of the optical frequency mixing module, on which the echo signal is input. The quarter-wave plate is configured to convert a polarization state of the echo signal from a circular polarization state into a linear polarization state. Optionally, the quarter-wave plate disposed on the side, of the beam splitter 2021, on which the sounding signal is output and the quarter-wave plate disposed on the side, of the optical frequency mixing module, on which the echo signal is input are one wave plate. As shown in FIG. 3A or FIG. 3C, the receiving module 203 includes a polarization beam splitter 2031, a quarter-wave plate 2032, a primary lens 2033, and a secondary lens 2035. Optionally, the receiving module further includes an optical device, for example, a secondary reflector 2034. It should be noted that the receiving module is configured to transmit the sounding signal and receive the echo signal. The quarter-wave plate 2032 is disposed on a refractive exit surface of the polarization beam splitter 2031. The laser 200, the beam shaping module 201, the beam splitting module 202, the polarization beam splitter 2031, and the quarter-wave plate 2032 are disposed on one axis. The sounding signal is transmitted to the quarter-wave plate 2032 through the polarization beam splitter 2031, and is then converted into a sounding signal whose polarization state is a circular polarization state or an elliptic polarization state. The sounding signal is transmitted by the scanner to the target object. The reflected signal is reflected by the target object to obtain the echo signal. The echo signal is received by the transmitting module 203 through the scanner, and is converted by the quarter-wave plate 2032 into an echo signal whose polarization state is a linear polarization state. The echo signal is refracted by the polarization beam splitter 2031 to an optical module including the primary lens 2033, the secondary reflector 2034, and the secondary lens 2035. The optical module aggregates the echo signal to the optical frequency mixing module 204 for optical frequency mixing with the local-frequency signal.

Optionally, the quarter-wave plate disposed on the side, of the beam splitter 2021, on which the sounding signal is output and the quarter-wave plate disposed on the side, of the optical frequency mixing module, on which the echo signal is input are two different wave plates. Refer to FIG. 3B or FIG. 3D. FIG. 3D is a schematic diagram of an architecture of another laser radar optical system according to an embodiment of this application. According to the invention, the receiving module 203 shown in FIG. 3B or FIG. 3D includes optical devices, namely an apertured primary reflector 2036, a first quarter-wave plate 2037, a second quarter-wave plate 2038, a primary lens 2033, and a secondary lens 2035. Optionally, the receiving module further includes an optical device, for example, a secondary reflector 2034. It should be noted that the receiving module is configured to transmit the sounding signal and receive the echo signal. Fast axes of the first quarter-wave plate 2037 and the second quarter-wave plate 2038 shown in FIG. 3B and FIG. 3D and the polarization direction of the sounding signal obtained through beam splitting are at 45 degrees. According to the invention, first quarter-wave plate 2037 is disposed between a refractive exit surface of the beam splitter 2021 and an incident surface of the apertured primary reflector 2036. The laser 200, the beam shaping module 201, the beam splitting module 202, the apertured primary reflector 2036, and the first quarter-wave plate 2037 are disposed on one axis. The second quarter-wave plate 2038 is disposed between an exit surface of the receiving module 103 and an incident surface of the optical frequency mixing module 204. The sounding signal is converted by the first quarter-wave plate 2037 into a signal whose polarization state is a circular polarization state or an elliptic polarization state, and is transmitted by the apertured primary reflector 2036 and the scanner to the target object. The sounding signal is reflected by the target object to obtain the echo signal. The echo signal is received by the receiving module 203 through the scanner, and is reflected by the apertured primary reflector 2036 to an optical module including the primary lens 2033, the secondary lens 2035 and optionally the second reflector 2034

The optical module aggregates the echo signal to the second quarter-wave plate 2038. The second quarter-wave plate 2038 converts a polarization state of the echo signal from a circular polarization state or an elliptic polarization state to a linear polarization state. Then the echo signal is transmitted to the optical frequency mixing module 204 for optical frequency mixing with the local-frequency signal.

Step S303: The optical frequency mixing module performs optical frequency mixing on the local-frequency signal and the echo signal to obtain a first beat frequency signal and a second beat frequency signal.

Specifically, in this embodiment of this application, information in the beat frequency signal is obtained by using a coherent light beam that is formed by using the local-frequency signal and the echo signal based on frequency mixing in free space. To ensure full frequency mixing on the local-frequency signal and the echo signal, light spot sizes of the local-frequency signal and the echo signal need to be adjusted to be basically the same in the optical frequency mixing module 204, and then frequency mixing is performed on the local-frequency signal and the echo signal obtained through polarization direction conversion to obtain the first beat frequency signal and the second beat frequency signal. Because the optical frequency mixing module has a semi-transparent and semi-reflective property and performs transmission and reflection on a signal that passes, the optical frequency mixing module processes the local-frequency signal and the echo signal that pass to obtain the first beat frequency signal and the second beat frequency signal. The echo signal obtained through polarization direction conversion and the local-frequency signal are linearly polarized signals whose polarization directions are orthogonal.

Optionally, as shown in FIG. 3A or FIG. 3B, the optical frequency mixing module 204 includes a beam shaping lens 2042, a stop 2043, a beam combiner 2044, a second half-wave plate 2045, a first polarization beam splitter 2046, a first lens 2047, and a second lens 2048. The beam splitter 2021, the beam combiner 2044, the second half-wave plate 2045, and the first polarization beam splitter 2046 are disposed on one axis. The second half-wave plate 2045 is disposed between the beam combiner 2044 and the first polarization beam splitter 2046. The beam combiner 2044 is configured to perform beam combination on the local-frequency signal and the echo signal. An included angle between a fast axis of the second half-wave plate 2045 and a polarization direction of the local-frequency signal or the echo signal is 45°. The local-frequency signal is shaped by the beam shaping lens 2042 and the stop 2043 into a signal whose light spot size is the same as that of the echo signal. The beam combiner 2044 combines the echo signal obtained through polarization state conversion and the local-frequency signal into one optical path. Then the second half-wave plate 2045 converts, into a first 45-degree polarized signal and a second (45+90)-degree polarized signal respectively, the echo signal and the local-frequency signal that are combined into one optical path. Mixing frequency is performed on the first 45-degree polarized signal and the second 45-degree polarized signal at the first polarization beam splitter 2046 to obtain the first beat frequency signal and the second beat frequency signal whose phase difference is 180 degrees.

Optionally, as shown in FIG. 3C and FIG. 3D, the optical frequency mixing module 204 includes a beam shaping lens 2042, a stop 2043, a second polarization beam splitter 2040, a first lens 2047, and a second lens 2048. The local-frequency signal is shaped by the beam shaping lens 2042 and the stop 2043 into a signal whose light spot size is the same as that of the echo signal, and a polarization direction of the local-frequency signal is 45 degrees. A polarization direction of the echo signal obtained through polarization state conversion is (45+90) degrees. The echo signal and the local-frequency signal are linearly polarized light whose polarization directions are orthogonal. The second polarization beam splitter 2040 performs frequency mixing on the local-frequency signal and the echo signal respectively in two paths to obtain the first beat frequency signal and the second beat frequency signal whose phase difference is 180 degrees.

The first beat frequency signal and the second beat frequency signal obtained by the optical frequency mixing module 204 are aggregated by the first lens 2047 and the second lens 2048 to photosensitive surfaces of the detector 211 and the detector 212 respectively. Then the differential receiving unit 205 performs differential amplification on the first beat frequency signal and the second beat frequency signal received by the detector 211 and the detector 212 to obtain one beat frequency signal. The beat frequency signal obtained through differential amplification is output by the differential receiving unit 205 by performing differential amplification on the signals received by the detector 211 and the detector 212. With the signal output through differential amplification, noise can be greatly reduced, and a signal-to-noise ratio can be increased, thereby improving measurement precision. It should be noted that polarization states of the first 45-degree polarized signal and the second 45-degree polarized signal are linear polarization states.

It should be noted that, for the wave plate mentioned in this embodiment of this application, including the quarter-wave plate, the first quarter-wave plate, the second quarter-wave plate, the first half-wave plate, and the second half-wave plate, an exit surface or an incident surface of an optical lens adjacent to the wave plate may be coated with a film, or a wave plate may be bonded to the exit surface or the incident surface, to implement a function of the wave plate. For example, for the quarter-wave plate 2032 shown in FIG. 3A, the refractive exit surface of the polarization beam splitter 2031 may be coated with a film, or a wave plate may be bonded to the refractive exit surface, to implement a function of the quarter-wave plate 2032. Likewise, for the second half-wave plate 2045, a refractive incident surface of the first polarization beam splitter may be coated with a film, or a wave plate may be bonded to the refractive incident surface, to implement a function of the second half-wave plate 2045.

In the method shown in FIG. 3, a coherent detection and receiving optical path is implemented by a spatial optical path formed by optical modules such as a wave plate, a beam splitter, and a polarization beam splitter, thereby increasing an aperture for receiving an echo signal, so that more energy of the echo signal can be received, and precision of detecting a target object by a radar detection system is improved. An optical module, for example, a polarization beam splitter or an apertured primary reflector, in a transmitting/receiving module receives and detects a signal, so that interference caused by optical crosstalk to a received echo signal can be avoided. Polarization states of a sounding signal and an echo signal are converted, so that efficiency of optical frequency mixing can be improved. As used in the foregoing embodiments, the term "when" may be interpreted as "if", "after", "in response to determining", or "in response to detecting" based on the context. Similarly, the phrase "when it is determined that" or "if (a stated condition or event) is detected" may be interpreted as "if it is determined that", "in response to determining", "when (a stated condition or event) is detected", or "in response to detecting (a stated condition or event)" based on the context.

All or some of the foregoing embodiments may be implemented by using software, hardware, firmware, or any combination thereof. When software is used to implement the embodiments, all or a part of embodiments may be implemented in a form of a computer program product. The computer program product includes one or more computer instructions. When the computer program instructions are loaded and executed on the computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the procedures of the methods in embodiments may be implemented by a computer program instructing related hardware. The program may be stored in the computer-readable storage medium. When the program is executed, the procedures in the method embodiments may be included. The foregoing storage medium includes any medium that can store program code, such as a ROM, a random access memory RAM, a magnetic disk, or an optical disc.

## Claims

1. A laser radar, comprising:
a laser (200), configured to generate a laser signal;
a beam shaping module (201), configured to perform collimation on the laser signal;
a beam splitting module (202), configured to perform beam splitting on a laser signal obtained through collimation to obtain a sounding signal and a local-frequency signal and comprising a beam splitter (2021);
a receiving module (203), configured to receive an echo signal and transmit the echo signal to an optical frequency mixing module (204), wherein the echo signal is a reflected signal formed after the sounding signal irradiates a target object (210);
the optical frequency mixing module (204), configured to perform optical frequency mixing on the local-frequency signal and the echo signal to obtain a first beat frequency signal and a second beat frequency signal, wherein a phase difference between the first beat frequency signal and the second beat frequency signal is 180 degrees; and
a differential receiving unit (205), configured to differentially receive the first beat frequency signal and the second beat frequency signal, wherein the first beat frequency signal and the second beat frequency signal are used to determine target information of the target object (201),
wherein the receiving module (203) includes a scanner (203A) an apertured primary reflector (2036), a first quarter-wave plate (2037), a second quarter-wave plate (2038), a primary lens (2033), and a secondary lens (2035), the first quarter-wave plate (2037) is disposed between a refractive exit surface of the beam splitter (2021) and an incident surface of the apertured primary reflector (2036), the laser (200), the beam shaping module (201), the beam splitting module (202), the apertured primary reflector (2036), and the first quarter-wave plate (2037) are disposed on one axis, the second quarter-wave plate (2038) is disposed between an exit surface of the receiving module (203) and an incident surface of the optical frequency mixing module (204), the sounding signal is converted by the first quarter-wave plate (2037) into a signal whose polarization state is a circular polarization state or an elliptic polarization state, and is transmitted by the apertured primary reflector (2036) and the scanner to the target object (210), the echo signal is received by the receiving module (203) through the scanner, and is reflected by the apertured primary reflector (2036) to an optical module including the primary lens (2033) and the secondary lens (2035).

2. The radar according to claim 1, wherein the beam splitting module (201) comprises the beam splitter (2021) and a first half-wave plate 2022), the first half-wave plate (2022) is disposed between the beam shaping module (201) and the beam splitter (2021), and the first half-wave plate (2022) is configured to adjust a polarization direction of the laser signal.

3. The radar according to claim 1 or 2, wherein the receiving module (203) further comprises a secondary reflector 2034) disposed on the optical path between the primary lens (2033) and the secondary lens (2035).

4. The radar according to any one of claims 1 to 3, wherein the second quarter-wave plate (2038) is disposed between the secondary lens (2035) and the optical frequency mixing module (204).

5. The radar according to any one of claims 1 to 4, wherein the optical frequency mixing module (204) comprises a beam combiner (2044), a first polarization beam splitter (2046), and a second half-wave plate (2045), the second half-wave plate (2045) is disposed between the beam combiner (2044) and the first polarization beam splitter (2046), and the beam splitter (2021) included in the beam splitting module (202), the beam combiner (2044), the second half-wave plate (2045), and the first polarization beam splitter (2046) are disposed on one axis;
the beam combiner (2044) is configured to combine the echo signal for polarization state conversion and the local-frequency signal into one optical path;
the second half-wave plate (2045) is configured to convert the echo signal and the local-frequency signal that are combined into one optical path into a first 45-degree polarized signal and a second 45-degree polarized signal respectively, wherein the first 45-degree polarized signal and the second 45-degree polarized signal are signals whose polarization directions are orthogonal; and
the first polarization beam splitter (2046) is configured to perform frequency mixing on the first 45-degree polarized light and the second 45-degree polarized light to obtain the first beat frequency signal and the second beat frequency signal.

6. The radar according to any one of claims 1 to 4, wherein the optical frequency mixing module (204) comprises a second polarization beam splitter (2040), and the beam splitter (2021) included in the beam splitting module (202) and the second polarization beam splitter (2040) are disposed on one axis; and
the second polarization beam splitter (2040) is configured to perform frequency mixing on the echo signal for polarization state conversion and the local-frequency signal that are respectively in two optical paths, to obtain the first beat frequency signal and the second beat frequency signal.

7. The radar according to any one of claims 1 to 6, wherein in the optical frequency mixing module (204) polarization states of the sounding signal and the local-frequency signal are linear polarization states.

8. The radar according to claim 7, wherein a polarization state of a sounding signal obtained through polarization state conversion by means of the first quarter-wave plate (2037) is a circular polarization state or an elliptical polarization state.

9. The radar according to claim 7, wherein in the receiving module (203), from a side facing the target object (210) up to the second quarter-wave plate (2038), a polarization state of the echo signal is a circular polarization state or an elliptical polarization state, and downstream of the second quarter-wave plate (2038) a polarization state of the echo signal obtained through polarization state conversion is a linear polarization state.

10. The radar according to any one of claims 1 to 9, wherein the target information comprises at least one of a distance or a speed.

11. An intelligent vehicle (001), comprising a laser radar, according to any of the claims 1-10, and a processor (113), wherein the processor (113) is configured to perform intelligent driving based on the laser radar.

12. A beat frequency generation method by means of which a laser radar according to any one of claims 1 to 10 is operated and comprising the following steps:
performing (S300), by the beam shaping module (201), collimation on the laser signal generated by the laser (200);
performing (S301), by the beam splitting module (202), beam splitting on the laser signal obtained through the collimation, to obtain the sounding signal and the local-frequency signal;
receiving (S302), by the receiving module (203), the echo signal and transmitting, by the receiving module (203), the echo signal to the optical frequency mixing module (204); and
performing (S303), by the optical frequency mixing module (204), optical frequency mixing on the local-frequency signal and the echo signal to obtain the first beat frequency signal and the second beat frequency signal.

## Patentansprüche

1. Laserradar, der Folgendes umfasst:
einen Laser (200), der zum Erzeugen eines Lasersignals ausgelegt ist;
ein Strahlformungsmodul (201), das zum Durchführen einer Kollimation am Lasersignal ausgelegt ist;
ein Strahlteilungsmodul (202), das zum Durchführen einer Strahlteilung an einem durch Kollimation erhaltenen Lasersignal, um ein "Sounding"-Signal und ein Signal einer lokalen Frequenz zu erhalten, ausgelegt ist und einen Strahlteiler (2021) umfasst;
ein Empfangsmodul (203), das zum Empfangen eines Echosignals und Übertragen des Echosignals an ein Modul zum optischen Frequenzmischen (204) ausgelegt ist, wobei das Echosignal ein reflektiertes Signal ist, das gebildet wird, nachdem das "Sounding"-Signal ein Zielobjekt (210) bestrahlt;
das Modul zum optischen Frequenzmischen (204), das zum Durchführen eines optischen Frequenzmischens am Signal einer lokalen Frequenz und am Echosignal ausgelegt ist, um ein erstes Schwebungsfrequenzsignal und ein zweites Schwebungsfrequenzsignal zu erhalten, wobei eine Phasendifferenz zwischen dem ersten Schwebungsfrequenzsignal und dem zweiten Schwebungsfrequenzsignal 180 Grad beträgt; und
eine Einheit zum differenziellen Empfangen (205), die zum differenziellen Empfangen des ersten Schwebungsfrequenzsignals und des zweiten Schwebungsfrequenzsignals ausgelegt ist, wobei das erste Schwebungsfrequenzsignal und das zweite Schwebungsfrequenzsignal zum Bestimmen von Zielinformationen des Zielobjekts (201) verwendet werden,
wobei das Empfangsmodul (203) einen Scanner (203A), einen mit Öffnungen versehenen primären Reflektor (2036), eine erste Viertelwellenplatte (2037), eine zweite Viertelwellenplatte (2038), eine primäre Linse (2033) und eine sekundäre Linse (2035) enthält, die erste Viertelwellenplatte (2037) zwischen einer refraktiven Austrittsfläche des Strahlteilers (2021) und einer Einfallfläche des mit Öffnungen versehenen primären Reflektors (2036) angeordnet ist, der Laser (200), das Strahlformungsmodul (201), das Strahlteilungsmodul (202), der mit Öffnungen versehene primäre Reflektor (2036) und die erste Viertelwellenplatte (2037) auf einer Achse angeordnet sind, die zweite Viertelwellenplatte (2038) zwischen einer Austrittsfläche des Empfangsmoduls (203) und einer Einfallfläche des Moduls zum optischen Frequenzmischen (204) angeordnet ist, das "Sounding"-Signal durch die erste Viertelwellenplatte (2037) in ein Signal umgewandelt wird, dessen Polarisationszustand ein Zustand einer zirkularen Polarisation oder ein Zustand einer elliptischen Polarisation ist und durch den mit Öffnungen versehenen primären Reflektor (2036) und den Scanner an das Zielobjekt (210) übertragen wird, das Echosignal durch das Empfangsmodul (203) über den Scanner empfangen wird und durch den mit Öffnungen versehenen primären Reflektor (2036) an ein optisches Modul, einschließlich der primären Linse (2033) und der sekundären Linse (2035), reflektiert wird.

2. Radar nach Anspruch 1, wobei das Strahlteilungsmodul (201) den Strahlteiler (2021) und eine erste Halbwellenplatte (2022) umfasst, die erste Halbwellenplatte (2022) zwischen dem Strahlformungsmodul (201) und dem Strahlteiler (2021) angeordnet ist und die erste Halbwellenplatte (2022) zum Anpassen einer Polarisationsrichtung des Lasersignals ausgelegt ist.

3. Radar nach Anspruch 1 oder 2, wobei das Empfangsmodul (203) ferner einen sekundären Reflektor (2034) umfasst, der auf dem Strahlengang zwischen der primären Linse (2033) und der sekundären Linse (2035) angeordnet ist.

4. Radar nach einem der Ansprüche 1 bis 3, wobei die zweite Viertelwellenplatte (2038) zwischen der sekundären Linse (2035) und dem Modul zum optischen Frequenzmischen (204) angeordnet ist.

5. Radar nach einem der Ansprüche 1 bis 4, wobei das Modul zum optischen Frequenzmischen (204) einen Strahlkombinierer (2044), einen ersten Polarisationsstrahlteiler (2046) und eine zweite Halbwellenplatte (2045) umfasst, die zweite Halbwellenplatte (2045) zwischen dem Strahlkombinierer (2044) und dem ersten Polarisationsstrahlteiler (2046) angeordnet ist und der Strahlteiler (2021), der in dem Strahlteilungsmodul (202) enthalten ist, der Strahlkombinierer (2044), die zweite Halbwellenplatte (2045) und der erste Polarisationsstrahlteiler (2046) auf einer Achse angeordnet sind;
der Strahlkombinierer (2044) zum Kombinieren des Echosignals zur Umwandlung des Polarisationszustands und des Signals einer lokalen Frequenz in einen Strahlengang ausgelegt ist;
die zweite Halbwellenplatte (2045) zum Umwandeln des Echosignals und des Signals einer lokalen Frequenz, die in einen Strahlengang kombiniert sind, in ein erstes 45-Grad-polarisiertes Signal bzw. ein zweites 45-Grad-polarisiertes Signal ausgelegt ist, wobei das erste 45-Grad-polarisierte Signal und das zweite 45-Grad-polarisierte Signal Signale sind, deren Polarisationsrichtungen orthogonal sind; und
der erste Polarisationsstrahlteiler (2046) zum Durchführen eines Frequenzmischens am ersten 45-Grad-polarisierten Licht und am zweiten 45-Grad-polarisierten Licht, um das erste Schwebungsfrequenzsignal und das zweite Schwebungsfrequenzsignal zu erhalten, ausgelegt ist.

6. Radar nach einem der Ansprüche 1 bis 4, wobei das Modul zum optischen Frequenzmischen (204) einen zweiten Polarisationsstrahlteiler (2040) umfasst und der Strahlteiler (2021), der in dem Strahlteilungsmodul (202) enthalten ist, und der zweite Polarisationsstrahlteiler (2040) auf einer Achse angeordnet sind; und
der zweite Polarisationsstrahlteiler (2040) zum Durchführen eines Frequenzmischens am Echosignal zur Umwandlung des Polarisationszustands und am Signal einer lokalen Frequenz, die jeweils in zwei Strahlengängen sind, um das erste Schwebungsfrequenzsignal und das zweite Schwebungsfrequenzsignal zu erhalten, ausgelegt ist.

7. Radar nach einem der Ansprüche 1 bis 6, wobei in dem Modul zum optischen Frequenzmischen (204) Polarisationszustände des "Sounding"-Signals und des Signals einer lokalen Frequenz Zustände einer linearen Polarisation sind.

8. Radar nach Anspruch 7, wobei ein Polarisationszustand eines "Sounding"-Signals, das durch eine Umwandlung des Polarisationszustands mittels der ersten Viertelwellenplatte (2037) erhalten wurde, ein Zustand einer zirkularen Polarisation oder ein Zustand einer elliptischen Polarisation ist.

9. Radar nach Anspruch 7, wobei in dem Empfangsmodul (203), von einer Seite, die dem Zielobjekt (210) zugewandt ist, bis zu der zweiten Viertelwellenplatte (2038), ein Polarisationszustand des Echosignals ein Zustand einer zirkularen Polarisation oder ein Zustand einer elliptischen Polarisation ist und stromabwärts der zweiten Viertelwellenplatte (2038) ein Polarisationszustand des Echosignals, das durch eine Umwandlung des Polarisationszustands erhalten wurde, ein Zustand einer linearen Polarisation ist.

10. Radar nach einem der Ansprüche 1 bis 9, wobei die Zielinformationen zumindest eines von einer Entfernung oder einer Geschwindigkeit umfassen.

11. Intelligentes Fahrzeug (001), das einen Laserradar nach einem der Ansprüche 1-10 und einen Prozessor (113) umfasst, wobei der Prozessor (113) zum Durchführen eines intelligenten Fahrens basierend auf dem Laserradar ausgelegt ist.

12. Schwebungsfrequenzerzeugungsverfahren, mittels dessen ein Laserradar nach einem der Ansprüche 1 bis 10 betrieben wird und das die folgenden Schritte umfasst:
Durchführen (S300), durch das Strahlformungsmodul (201), einer Kollimation am durch den Laser (200) erzeugten Lasersignal;
Durchführen (S301), durch das Strahlteilungsmodul (202), einer Strahlteilung am durch die Kollimation erhaltenen Lasersignal, um das "Sounding"-Signal und das Signal einer lokalen Frequenz zu erhalten;
Empfangen (S302), durch das Empfangsmodul (203), des Echosignals und Übertragen, durch das Empfangsmodul (203), des Echosignals an das Modul zum optischen Frequenzmischen (204) und
Durchführen (S303), durch das Modul zum optischen Frequenzmischen (204), eines optischen Frequenzmischens am Signal einer lokalen Frequenz und am Echosignal, um das erste Schwebungsfrequenzsignal und das zweite Schwebungsfrequenzsignal zu erhalten.

## Revendications

1. Radar laser, comprenant :
un laser (200), configuré pour générer un signal laser ;
un module de mise en forme de faisceau (201), configuré pour réaliser une collimation sur le signal laser ;
un module de séparation de faisceau (202), configuré pour réaliser une séparation de faisceau sur un signal laser obtenu par collimation afin d'obtenir un signal de sondage et un signal de fréquence locale et comprenant un séparateur de faisceau (2021) ;
un module de réception (203), configuré pour recevoir un signal d'écho et transmettre le signal d'écho à un module de mixage de fréquences optiques (204), dans lequel le signal d'écho est un signal réfléchi formé après que le signal de sondage a irradié un objet cible (210) ;
le module de mixage de fréquences optiques (204) étant configuré pour réaliser un mixage de fréquences optiques sur le signal de fréquence locale et le signal d'écho afin d'obtenir un premier signal de fréquence de battement et un second signal de fréquence de battement, dans lequel une différence de phase entre le premier signal de fréquence de battement et le second signal de fréquence de battement est de 180 degrés ; et
une unité de réception différentielle (205), configurée pour recevoir de manière différentielle le premier signal de fréquence de battement et le second signal de fréquence de battement, dans lequel le premier signal de fréquence de battement et le second signal de fréquence de battement sont utilisés pour déterminer des informations cibles de l'objet cible (201),
dans lequel le module de réception (203) comprend un scanner (203A)
un réflecteur primaire ouvert (2036), une première plaque quart d'onde (2037), une seconde plaque quart d'onde (2038), une lentille primaire (2033) et une lentille secondaire (2035), la première plaque quart d'onde (2037) est disposée entre une surface de sortie réfractive du séparateur de faisceau (2021) et une surface incidente du réflecteur primaire ouvert (2036), le laser (200), le module de mise en forme de faisceau (201), le module de séparation de faisceau (202), le réflecteur primaire ouvert (2036) et la première plaque quart d'onde (2037) sont disposés sur un même axe, la seconde plaque quart d'onde (2038) est disposée entre une surface de sortie du module de réception (203) et une surface incidente du module de mixage de fréquences optiques (204), le signal de sondage est converti par la première plaque quart d'onde (2037) en un signal dont l'état de polarisation est un état de polarisation circulaire ou un état de polarisation elliptique, et est transmis par le réflecteur primaire ouvert (2036) et le scanner à l'objet cible (210), le signal d'écho est reçu par le module de réception (203) à travers le scanner, et est réfléchi par le réflecteur primaire ouvert (2036) vers un module optique comprenant la lentille primaire (2033) et la lentille secondaire (2035).

2. Radar selon la revendication l, dans lequel le module de séparation de faisceau (201) comprend le séparateur de faisceau (2021) et une première plaque demi-onde (2022), la première plaque demi-onde (2022) est disposée entre le module de mise en forme de faisceau (201) et le séparateur de faisceau (2021), et la première plaque demi-onde (2022) est configurée pour ajuster une direction de polarisation du signal laser.

3. Radar selon la revendication 1 ou 2, dans lequel le module de réception (203) comprend en outre un réflecteur secondaire (2034) disposé sur le chemin optique entre la lentille primaire (2033) et la lentille secondaire (2035).

4. Radar selon l'une quelconque des revendications 1 à 3, dans lequel la seconde plaque quart d'onde (2038) est disposée entre la lentille secondaire (2035) et le module de mixage de fréquences optiques (204).

5. Radar selon l'une quelconque des revendications 1 à 4, dans lequel le module de mixage de fréquences optiques (204) comprend un combinateur de faisceau (2044), un premier séparateur de faisceau de polarisation (2046) et une seconde plaque demi-onde (2045), la seconde plaque demi-onde (2045) est disposée entre le combinateur de faisceau (2044) et le premier séparateur de faisceau de polarisation (2046), et le séparateur de faisceau (2021) inclus dans le module de séparation de faisceau (202), le combinateur de faisceau (2044), la seconde demi-plaque d'onde (2045) et le premier séparateur de faisceau de polarisation (2046) sont disposés sur un même axe ;
le combinateur de faisceau (2044) est configuré pour combiner le signal d'écho en vue d'une conversion d'état de polarisation et le signal de fréquence locale sur un même chemin optique ;
la seconde plaque demi-onde (2045) est configurée pour convertir le signal d'écho et le signal de fréquence locale qui sont combinés sur un même chemin optique en un premier signal polarisé à 45 degrés et un second signal polarisé à 45 degrés respectivement, le premier signal polarisé à 45 degrés et le second signal polarisé à 45 degrés étant des signaux dont les directions de polarisation sont orthogonales ; et
le premier séparateur de faisceau de polarisation (2046) est configuré pour réaliser un mixage de fréquences sur la première lumière polarisée à 45 degrés et la seconde lumière polarisée à 45 degrés afin d'obtenir le premier signal de fréquence de battement et le second signal de fréquence de battement.

6. Radar selon l'une quelconque des revendications 1 à 4, dans lequel le module de mixage de fréquences optiques (204) comprend un second séparateur de faisceau de polarisation (2040), et le séparateur de faisceau (2021) inclus dans le module de séparation de faisceau (202) et le second séparateur de faisceau de polarisation (2040) sont disposés sur un même axe ; et
le second séparateur de faisceau de polarisation (2040) est configuré pour réaliser un mixage de fréquences sur le signal d'écho en vue d'une conversion d'état de polarisation et le signal de fréquence locale qui se trouvent respectivement sur deux chemins optiques, afin d'obtenir le premier signal de fréquence de battement et le second signal de fréquence de battement.

7. Radar selon l'une quelconque des revendications 1 à 6, dans lequel dans le module de mixage de fréquences optiques (204), les états de polarisation du signal de sondage et du signal de fréquence locale sont des états de polarisation linéaires.

8. Radar selon la revendication 7, dans lequel un état de polarisation d'un signal de sondage obtenu par conversion d'état de polarisation au moyen de la première plaque quart d'onde (2037) est un état de polarisation circulaire ou un état de polarisation elliptique.

9. Radar selon la revendication 7, dans lequel dans le module de réception (203), depuis un côté faisant face à l'objet cible (210) jusqu'à la seconde plaque quart d'onde (2038), un état de polarisation du signal d'écho est un état de polarisation circulaire ou un état de polarisation elliptique, et en aval de la seconde plaque quart d'onde (2038) un état de polarisation du signal d'écho obtenu par conversion d'état de polarisation est un état de polarisation linéaire.

10. Radar selon l'une quelconque des revendications 1 à 9, dans lequel les informations cibles comprennent au moins une distance ou une vitesse.

11. Véhicule intelligent (001), comprenant un radar laser, selon l'une quelconque des revendications 1 à 10, et un processeur (113), dans lequel
le processeur (113) est configuré pour réaliser une conduite intelligente basée sur le radar laser.

12. Procédé de génération de fréquence de battement au moyen duquel un radar laser selon l'une quelconque des revendications 1 à 10 est actionné et comprenant les étapes suivantes :
la réalisation (S300), par le module de mise en forme de faisceau (201), d'une collimation sur le signal laser généré par le laser (200) ;
la réalisation (S301), par le module de séparation de faisceau (202), d'une séparation de faisceau sur le signal laser obtenu par collimation, afin d'obtenir le signal de sondage et le signal de fréquence locale ;
la réception (S302), par le module de réception (203), du signal d'écho et la transmission, par le module de réception (203), du signal d'écho au module de mixage de fréquences optiques (204) ; et
la réalisation (S303), par le module de mixage de fréquences optiques (204), d'un mixage de fréquences optiques sur le signal de fréquence locale et le signal d'écho afin d'obtenir le premier signal de fréquence de battement et le second signal de fréquence de battement.
